# EUROPEAN PATENT APPLICATION

(11) **EP 3 210 817 A1**
(43) Date of publication of application: **30.08.2017**
(21) Application number: 16275032.7
(22) Date of filing: 23.02.2016
(51) Int. Cl.: B60L 11/18, H02J 1/00

(54) **FUEL CELL HYBRID POWER SYSTEM**

(71) Applicant: University of Hertfordshire Higher Education Corporation, Hatfield Hertfordshire AL10 9AB (GB)
(72) Inventor: The designation of the inventor has not yet been filed
(74) Representative: BAE SYSTEMS plc Group IP Department

(57) **Abstract**

A power system comprising: an electrical power bus; one or more loads (20) electrically coupled to the electrical power bus; a fuel cell (10); a DC-DC converter (14) electrically coupled between the fuel cell (10) and the electrical power bus; a battery (34); a switch (38) electrically coupled between the battery (34) and the electrical power bus; and a power system manager (22) configured to control operation of the switch (38); wherein the switch (38) is switchable between a first state and a second state; the first state of the switch (38) is such that the battery (34) is directly connected to the electrical power bus such that the battery (34) provides electrical power directly to the electrical power bus; and the second state of the switch (38) is such that the battery (34) is disconnected from the electrical power bus.

## Description

### FIELD OF THE INVENTION

The present invention relates to fuel cell hybrid power systems.

### BACKGROUND

Fuel cell hybrid electric Unmanned Aerial Vehicles (UAVs) have gained considerable interest in the aviation industry, for example, due to their low noise, reduced emissions and potential for replacing satellites in certain applications.

However, a limitation of UAVs is the maximum flight duration or endurance capability of the propulsion system.

### SUMMARY OF THE INVENTION

The present inventor has realised that improving power management in a power system of a fuel cell hybrid electric UAV would tend to improve UAV flight endurance.

The present inventors have realised it would be beneficial to provide a power management algorithm that optimises use of a fuel cell, a battery, and a supercapacitor. The present inventors have realised that it would be beneficial to constrain the fuel cell, battery, and/or supercapacitor to operate in regions of lower losses by sharing the load power demand.

In a first aspect, the present invention provides a power system comprising: an electrical power bus; one or more loads electrically coupled to the electrical power bus; a fuel cell; a DC-DC converter electrically coupled between the fuel cell and the electrical power bus; a battery; a switch electrically coupled between the battery and the electrical power bus; and a power system manager configured to control operation of the switch. The switch is switchable between a first state and a second state. The first state of the switch is such that the battery is directly connected to the electrical power bus such that the battery provides electrical power directly to the electrical power bus. The second state of the switch is such that the battery is disconnected from the electrical power bus.

The power system may comprise only a single DC-DC converter.

The power system may further comprise a measurement device configured measure fuel level for the fuel cell, and to send the measured fuel level for the fuel cell to the power system manager.

The power system may further comprise a first state of charge measurement device configured measure a state of charge of the battery, and to send the measured state of charge of the battery to the power system manager.

The power system manager may be configured to control operation of the switch depending upon one or more parameters selected from the group of parameters consisting of: a state of charge of the battery, a state of charge of a supercapacitor, a fuel level for the fuel cell, and a load demand of the one or more loads.

The battery may be a rechargeable battery. The power system may further comprise a battery charger coupled between the electrical power bus and the battery via the switch. The switch may be switchable between its first state, its second state, and a third state. The third state of the switch may be such that the battery is connected to the electrical power bus via the battery charger such that the battery charger charges the battery with electrical power from the electrical power bus.

The power system may further comprise a supercapacitor and a further switch electrically coupled between the supercapacitor and the electrical power bus. The power system manager may be configured to control operation of the further switch. The further switch may be switchable between a first state and a second state. The first state of the further switch may be such that the supercapacitor is directly connected to the electrical power bus such that the supercapacitor provides electrical power directly to the electrical power bus. The second state of the further switch may be such that the supercapacitor is disconnected from the electrical power bus.

The power system may further comprise a second state of charge measurement device configured measure a state of charge of the supercapacitor, and to send the measured state of charge of the supercapacitor to the power system manager.

The power system manager may be configured to control operation of the further switch depending upon one or more parameters selected from the group of parameters consisting of: a state of charge of the battery, a state of charge of a supercapacitor, a fuel level for the fuel cell, and a load demand of the one or more loads.

The power system may further comprise a resistor coupled between the electrical power bus and the super capacitor via the further switch. The further switch may be switchable between its first state, its second state, and a third state. The third state of the further switch may be such that the supercapacitor is connected to the electrical power bus via the resistor such that the supercapacitor receives electrical power from the electrical power bus via the resistor.

The DC-DC converter may be configured to convert a power supply received from the fuel cell into a constant voltage power supply having a voltage substantially equal to a predefined voltage level, and to output the constant voltage power supply to the electrical power bus. The battery may be configured to provide, to the electrical power bus, an electrical power supply having a voltage substantially equal to the predefined voltage level.

The power system may further comprise a second further switch coupled between the DC-DC converter and the electrical power bus. The power system manager may be configured to control operation of the second further switch depending upon one or more parameters selected from the group of parameters consisting of: a state of charge of the battery, a state of charge of a supercapacitor; a fuel level for the fuel cell, and a load demand of the one or more loads. The second further switch may be switchable between a first state and a second state. The first state of the second further switch may be such that the fuel cell is electrically connected to the electrical power bus via the DC-DC converter such that the fuel cell provides electrical power directly to the electrical power bus. The second state of the further switch may be such that the DC-DC converter and the fuel cell are disconnected from the electrical power bus.

In a further aspect, the present invention provides a vehicle comprising a power system according to any preceding aspect. The vehicle may be an unmanned air vehicle.

In a further aspect, the present invention provides a method of providing a power system. The method comprises: electrically coupling one or more loads to an electrical power bus; providing a fuel cell; electrically coupling a DC-DC converter between the fuel cell and the electrical power bus; providing a battery; electrically coupling a switch between the battery and the electrical power bus; and operatively coupling a power system manager to the switch, the power system manager configured to control operation of the switch. The switch is switchable between a first state and a second state. The first state of the switch is such that the battery is directly connected to the electrical power bus such that the battery provides electrical power directly to the electrical power bus. The second state of the switch is such that the battery is disconnected from the electrical power bus.

### BRIEF DESCRIPTION OF THE DRAWINGS

Figure 1 is a schematic illustration (not to scale) of an unmanned air vehicle;
Figure 2 is a schematic illustration (not to scale) showing an embodiment of a power system of the unmanned air vehicle;
Figure 3 is a schematic illustration (not to scale) showing further details of a battery module of the power system;
Figure 4 is a schematic illustration (not to scale) showing further details of a supercapacitor module of the power system; and
Figure 5 is a process flow chart showing certain steps of an embodiment of a method of operation of the power system.

### DETAILED DESCRIPTION

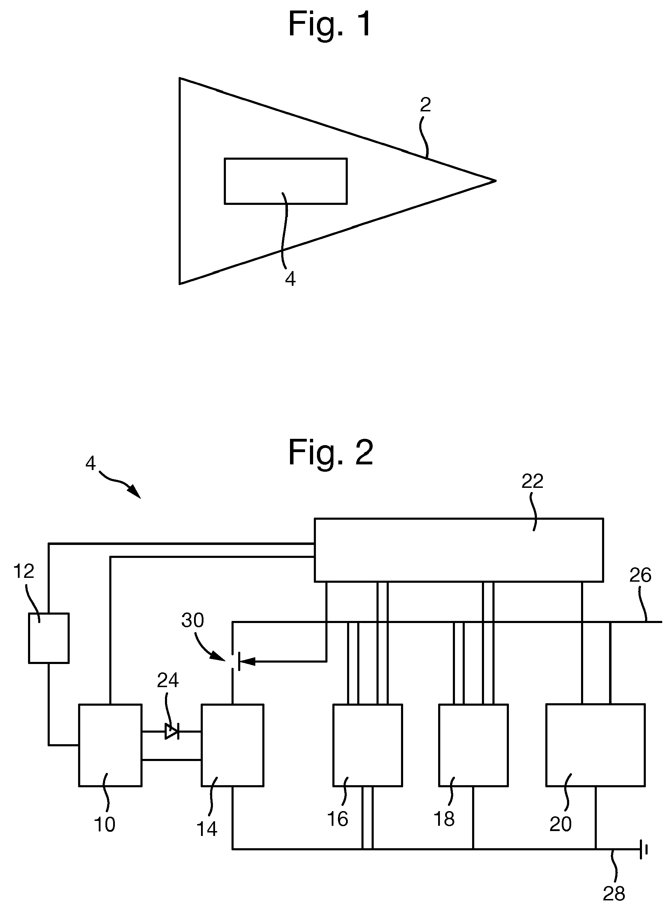

Figure 1 is a schematic illustration (not to scale) of an unmanned air vehicle (UAV) 2. The UAV 2 comprises a power system 4.

Figure 2 is a schematic illustration (not to scale) showing an embodiment of the power system 4.

In this embodiment, the power system 4 comprises a fuel cell 10, a fuel cell controller 12, a converter 14, a battery module 16, a supercapacitor module 18, a plurality of loads (which are collectively represented in Figure 2 by a single box and the reference numeral 20), and a power system manager 22.

The fuel cell 10 is a Proton Exchange Membrane (PEM) fuel cell configured to convert chemical energy in the form of hydrogen fuel into direct current (DC) electricity through a chemical reaction of positively charged hydrogen ions with oxygen from a received air supply. A supply of hydrogen fuel (not shown in the Figures) is located on board the UAV 2. The fuel cell 10 is coupled to the fuel cell controller 12 such that operation of the fuel cell 10 may be controlled by the fuel cell controller 12. The fuel cell 10 is further coupled to the converter 14 via a diode 24 such that DC electricity output by the fuel cell 10 is supplied to the converter 14. The fuel cell 10 is further coupled to power system manager 22 such that information may be sent from the fuel cell 10 to power system manager 22, as described in more detail later below.

The fuel cell controller 12 is a controller coupled to the fuel cell 10 and configured to control operation of the fuel cell 10. Control of the fuel cell 10 by the fuel cell controller 12 is described in more detail later below. The fuel cell controller 12 is coupled to the power system manager 22 such that information may be sent between the power system manager 22 and the fuel cell controller 12.

In this embodiment, the converter 14, the battery module 16, the supercapacitor module 18, and the plurality of loads 20 are coupled in parallel between a first electrical wire 26 and a second electrical wire 28. The first wire 26 and the second wire 28 form a DC bus. A voltage between the first wire 26 and the second wire 28 is a DC bus voltage. The second electrical wire 28 is grounded. Further systems on board the UAV 2 that utilise electrical power may be coupled to the DC bus between the first and second wires 26, 28.

The converter 14 is a DC-DC converter. The converter 14 is coupled to the fuel cell 10 via the diode 24 such that, in operation, the converter 14 receives DC electrical power from the fuel cell 10. The converter 14 is configured to, in operation, convert DC electrical power received from the fuel cell 10 from a first voltage level to a second voltage level. The converter 14 is configured to output DC electrical power at the second voltage level to the DC bus. In other words, the converter 14 is configured to establish a DC bus voltage having the second voltage level between the first wire 26 and the second wire 28. For example, the converter 14 may receive a constant current, variable voltage power supply from the fuel cell (e.g. a power supply having constant current and a voltage that varies in the range 18V to 72V), and may convert this received power supply to a variable current, constant voltage supply (e.g. a power supply having variable current and a constant 24V voltage).

In this embodiment, the converter 14 is coupled to the DC bus (in particular, to the first wire 26) via a first switch 30. The first switch 30 is a solid state switch. The first switch 30 is coupled to the power system manager 22 such that the power system manager 22 may control the first switch 30 to connect or disconnect the converter 14 from the first wire 26.

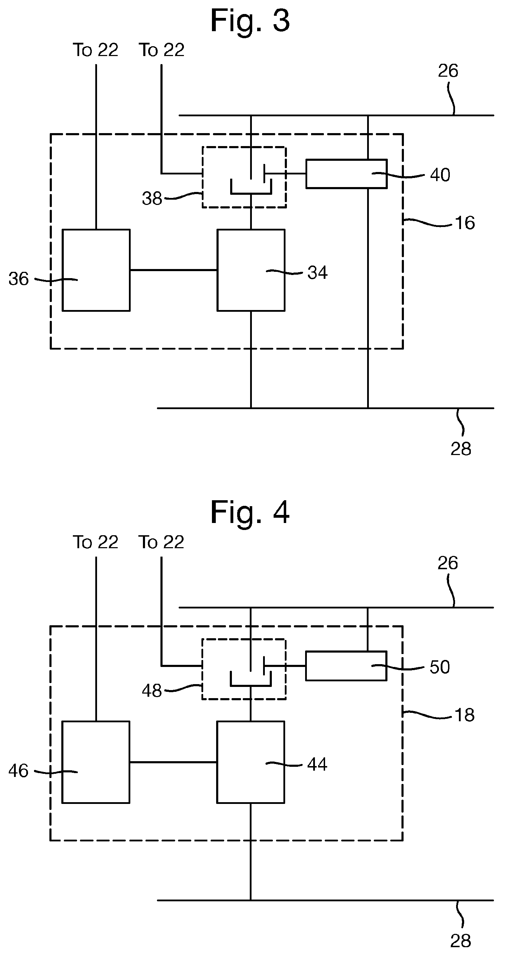

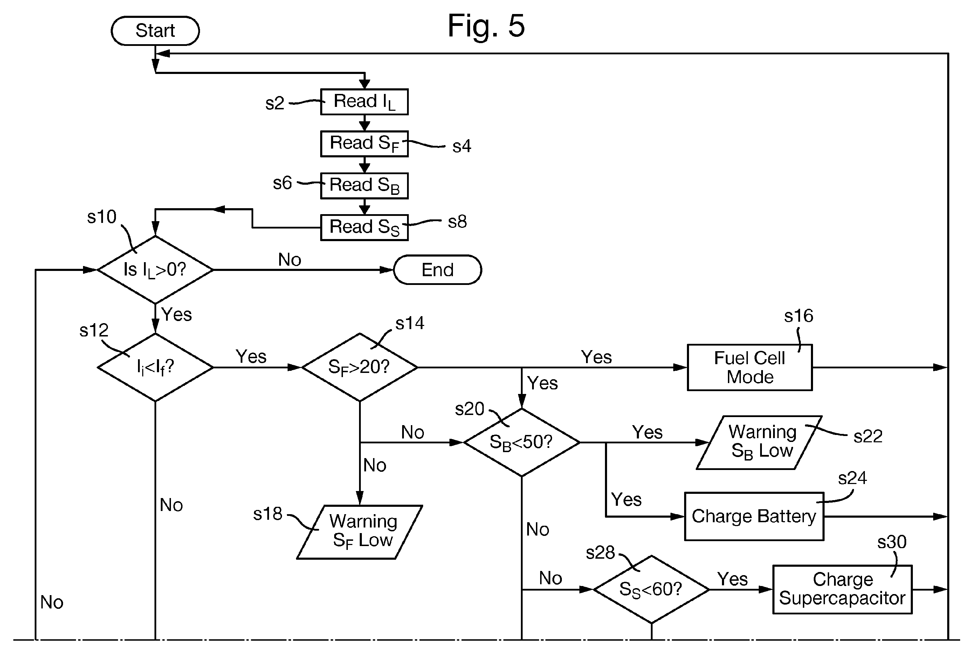

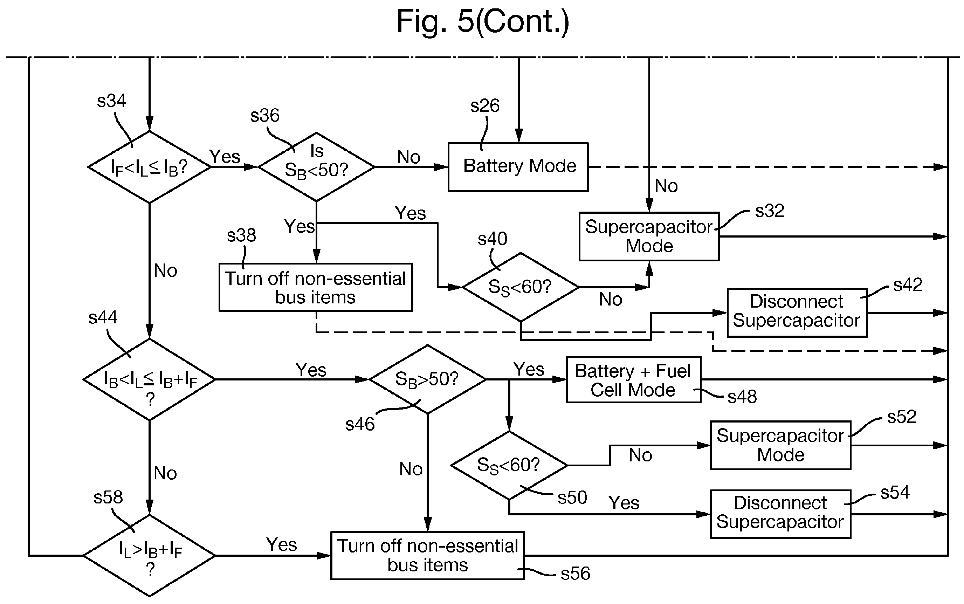

The battery module 16 is described in more detail later below with reference to Figure 3. The battery module 16 is electrically coupled to the DC bus between the first wire 26 and the second wire 28. The battery module 16 is configured to either receive electrical power from the DC bus, or to supply DC electrical power to the DC bus. The battery module 16 is further coupled to the power system manager 22 such that signals may be sent between the battery module 16 and the power system manager 22. Control and operation of the battery module 16 is described in more detail later below, for example with reference to Figure 5.

The supercapacitor module 18 is described in more detail later below with reference to Figure 4. The supercapacitor module 18 is electrically coupled to the DC bus between the first wire 26 and the second wire 28. The supercapacitor module 18 is configured to either receive electrical power from the DC bus, or to supply DC electrical power to the DC bus. The supercapacitor module 18 is further coupled to the power system manager 22 such that signals may be sent between the supercapacitor module 18 and the power system manager 22. Control and operation of the supercapacitor module 18 is described in more detail later below, for example with reference to Figure 5.

The plurality of loads 20 may include any appropriate aircraft subsystems located on board the UAV 2. The loads 20 may include, but are not limited to, a mission system, a navigation system, an avionics system, a fuel system, and an environmental control system. The plurality of loads 20 is electrically coupled to the DC bus between the first wire 26 and the second wire 28, and may receive electrical power from the DC bus. The plurality of loads 20 is further coupled to the power system manager 22 such that signals may be sent between the supercapacitor module 18 and the power system manager 22.

The power system manager 22 may include one or more processors configured to control the operation of the power system 4. Control of the power system 4 by the power system manager 22 is described in more detail later below, for example with reference to Figure 5.

Apparatus, including the power system manager 22, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 3 is a schematic illustration (not to scale) showing further details of the battery module 16.

In this embodiment, the battery module 16 comprises a battery 34, a first state of charge module 36, a second switch 38, and a battery charger 40.

The battery 34 may be any appropriate type of rechargeable battery, preferably a lithium polymer battery. In this embodiment, the battery 34 is configured to output a DC power supply having a constant voltage appropriate for the application, e.g. 24V. The battery 34 is coupled to the first state of charge module 36 such that the first state of charge module 36 may determine a state of charge of the battery 34. The battery 34 is further coupled to the DC bus between the first wire 26 and the second wire 28 via the second switch 38.

The first state of charge module 36 is configured to detect a state of charge of the battery 34. In addition to being coupled to the battery 34, the first state of charge module 36 is coupled to the power system manager 22 such that the battery state of charge information may be sent from the first state of charge module 36 to the power system manager 22. The first state of charge module 36 may comprise a state of charge circuit integrated with the rechargeable battery 34.

In this embodiment, the second switch 38 is single pole, triple throw (SPTT) switch (or equivalently, a single pole double throw (SPDT) switch having a stable off position, e.g. in the centre between its two throws). The second switch 38 is switchable between three states, each of which corresponds to a respective wiring path. In its first state, the second switch 38 directly electrically connects the battery 34 to the DC bus, i.e. between the first wire 26 and the second wire 28. When the second switch 38 is in this first state, the battery 34 discharges, thereby providing DC electrical power to the DC bus. In its second state, the second switch 38 electrically connects the battery 34 to the DC bus via the battery charger 40. When the second switch 38 is in this second state, the battery charger 40 charges the battery 34 using electrical power drawn from the DC bus. In its third state, the second switch 38 is open, and the battery 34 is disconnected from the DC bus. When the second switch 38 is in this third state, the battery 34 tends to substantially retain its charge, neither drawing power from nor supplying power to the DC bus.

The second switch 38 is a solid state switch. The second switch 38 is coupled to the power system manager 22 such that the power system manager 22 may control the second switch 38.

The battery charger 40 may be any appropriate type of battery charger or recharger. The battery charger 40 is coupled to the DC bus between the first wire 26 and the second wire 28 such that the battery charger 40 may draw electrical power from the DC bus to charge the battery 34. The battery charger 40 is configured to charge the battery 34 when the battery charger 40 is electrically coupled to the battery 34, i.e. when the second switch 38 is in its second state. The battery charger 40 advantageously tends to avoid having to remove the battery 34 from the UAV 2 for charging.

Figure 4 is a schematic illustration (not to scale) showing further details of the supercapacitor module 18.

In this embodiment, the supercapacitor module 18 comprises a supercapacitor 44, a second state of charge module 46, a third switch 48, and a resistor 50.

The supercapacitor 44 (sometimes called an ultracapcitor) is a high-capacity electrochemical capacitor. The supercapacitor 44 is coupled to the second state of charge module 46 such that the second state of charge module 46 may determine a state of charge of the supercapacitor 44. The supercapacitor 44 is further coupled to the DC bus between the first wire 26 and the second wire 28 via the third switch 48.

The second state of charge module 46 is configured to detect a state of charge of the supercapacitor 44. In addition to being coupled to the supercapacitor 44, the second state of charge module 46 is coupled to the power system manager 22 such that supercapacitor state of charge information may be sent between from second state of charge module 46 to the power system manager 22.

In this embodiment, the third switch 48 is single pole, triple throw (SPTT) switch (or equivalently, a single pole double throw (SPDT) switch having a stable off position, e.g. in the centre between its two throws). The third switch 48 is switchable between three states, each of which corresponds to a respective wiring path. In its first state, the third switch 48 directly electrically connects the supercapacitor 44 to the DC bus, i.e. between the first wire 26 and the second wire 28. When the third switch 48 is in this first state, the supercapacitor 44 discharges, thereby providing DC electrical power to the DC bus. In its second state, the third switch 48 electrically connects the supercapacitor 44 to the DC bus via the resistor 50. When the third switch 48 is in this second state, the supercapacitor 44 is charged from the DC bus via the resistor 50. In its third state, the third switch 48 is open, and the supercapacitor 44 is disconnected from the DC bus. When the third switch 48 is in this third state, the supercapacitor 44 tends to substantially retain its charge, neither drawing power from nor supplying power to the DC bus.

The third switch 48 is a solid state switch. The third switch 48 is coupled to the power system manager 22 such that the power system manager may control the third switch 48.

The resistor 50 may be any appropriate type of resistor having any appropriate resistance. The resistance of the resistor 50 may be selected based on a received charging current to be received by the supercapacitor 44. Preferably, this charging current is within the optimum nominal discharge regions of the battery 34 and the fuel cell 10. In this embodiment, the resistance of the resistor 50 is equal to the DC bus voltage divided by the charging current for the supercapacitor 44. For example, if the charging current within the high nominal discharge region of the battery 34 and an optimum region of the fuel cell 10 is 10A, and the DC bus voltage is 24V, the resistance of the resistor 50 is 24/10=2.4Ω.

In this embodiment, as described in more detail later below, the power management algorithm switches from the resistor charge path based on the supercapacitor state of charge.

In this embodiment, the resistor 50 is a heat dissipating ceramic resistor with a heat sink.

Advantageously, the resistor 50 tends facilitate a power demand of the supercapacitor 44 being met by the fuel cells 10 and/or battery 34. For example, if the resistor 50 was not used when charging the supercapacitor 44, the supercapacitor 44 would tend to experience an initial high charge current, for example, of 170A. It is likely that the fuel cell 10 would not be able to meet this high power demand. Also, this will tend to cause the battery 34 to operate in a high loss region, which will tend to result in high battery capacity charge loss. Also, this will tend to have a detrimental effect on the battery state of health and also on the fuel cell 10. These disadvantages tend to be at least partially overcome by use of the resistor 50.

The resistor 50 is coupled between the DC bus and the supercapacitor 44 such that, when the third switch 48 is in its second state, the supercapacitor 44 charges through the resistor 50. The resistor 50 advantageously tends to limit inrush current to the supercapacitor 44 from the DC bus when the supercapacitor 44 is charging. This limitation of the inrush current advantageously tends to prevent or oppose large drops in DC bus voltage, thereby improving the reliability of the power supply to the plurality of loads 20. Also, the limitation of the inrush current advantageously tends to limit the current received by the supercapacitor 44 from the fuel cell 10 and/or the battery 34. This tends to provide for reduced energy losses of the fuel cell 10 and/or battery 34, and tends to prevent damage to the fuel cell 10 and/or battery 34.

Thus, an embodiment of the power system 4 for the UAV 2 is provided.

What will now be described is the controlling of the various components and systems of the power system 4 by the power system manager 22.

In some embodiments, the fuel cell 10 is treated as the primary power source in the power system 4. In some embodiments in which the fuel cell 10 is the UAV's primary power source, the battery 34 is only used when current demand exceeds the maximum current that may be provided by the fuel cell 10, and/or during high transient load. The fuel cell current limit may be set for high hydrogen utilisation. Also, the fuel cell controller 12 is configured for high performance and hydrogen utilisation. In some embodiments in which the fuel cell 10 is the UAV's primary power source, the supercapacitor 44 is connected in parallel with the fuel cell 10 to filter transient load power surges and to prevent degradation of fuel cell performance. Advantageously, it tends to be possible to land the UAV 2 using power from only the battery 34, for example, if the fuel cell 10 were to fail. Preferably, the battery 34 is maintained at high state of charge in embodiments in which the fuel cell 10 is the UAV's primary power source.

In some embodiments, the battery 34 is treated as the primary power source in the power system 4. In some embodiments in which the battery 34 is the UAV's primary power source, the fuel cell 10 is used only to recharge the battery 34 during light loads when the battery state of charge is below a threshold level (e.g. 60%), or when current demand exceeds the battery current nominal limit. Advantageously, this power supply strategy tends to provide for highly efficient charging of the battery 34 to prevent power losses during charging the battery 34 from the fuel cell 10. This tends to be a particularly cost effective power supply strategy. Furthermore, lithium polymer batteries tend to occupy smaller volumes compared to fuel cells having the same power rating. Thus, space on board the UAV 2 is saved. Also, a relatively small fuel cell 10 can be used to directly charge the battery 34

In some embodiments, a load to source matching optimised strategy is implemented to control the power system 4. In such embodiments, each power source on the UAV 2 is selected to supply a load demand that is specific to that type of power source. For example, the fuel cell 10 may be selected to supply steady loads, and the battery 34 may be selected to supply transient loads. In some such embodiments, the power system 4 may be controlled to maintain the battery state of charge is above a threshold level (e.g. 60%). In some embodiments in which the load to source matching optimised strategy is implemented, the supercapacitor 44 may be selected to supply peak transient loads.

In some embodiments, the power system manager 22 controls the power system 4 by implementing a plurality of rules.

In some embodiments, the power system manager 22 acquires, for example from the loads 20, a value of the electrical current demanded by the loads 20 (hereinafter denoted I_{L}). In some embodiments, I_{L} may be expressed as a percentage of the maximum current that may be demanded by the loads 20. The power system manager 22 may also acquire, for example from the fuel cell 10, a value of the maximum current that the fuel cell 10 is able to supply to the DC bus (hereinafter denoted I_{F}). The power system manager 22 may also acquire, for example from the battery module 16, a value of the maximum current that the battery 34 is able to supply to the DC bus (hereinafter denoted I_{B}). In some embodiments, the power system manager 22 controls the battery module 16 using the following rules:
i) If I_{L} < I_{F} then the power system manager 22 controls the second switch 38 such that the battery 34 is charged by the battery charger 40, i.e. the second switch 38 is switched into its second state. In this embodiment, if I_{L} < I_{F} then the load state of the power system 4 is said to be "LIGHT".
ii) If I_{F} ≤ I_{L} < I_{B} then the power system manager 22 controls the second switch 38 such that the battery 34 discharges to the DC bus, i.e. the second switch 38 is switched into its first state. In this embodiment, if I_{F} ≤ I_{L} < I_{B} then the load state of the power system 4 is said to be "NORMAL".
iii) If I_{B} ≤ I_{L} < I_{F} + I_{B} then the power system manager 22 controls the second switch 38 such that the battery 34 discharges to the DC bus, i.e. the second switch 38 is switched into its first state. In this embodiment, if I_{B} ≤ I_{L} < I_{F} + I_{B} then the load state of the power system 4 is said to be "HEAVY".
iv) If I_{L} ≥ I_{F} + I_{B} then the power system manager 22 controls the second switch 38 such that the battery 34 discharges to the DC bus, i.e. the second switch 38 is switched into its first state. In this embodiment, if I_{L} ≥ I_{F} + I_{B} then the load state of the power system 4 is said to be "PEAK".

The load management strategy advantageously tends to charge the battery 34 during LIGHT load. Advantageously, the power system manager 22 may manage the load demand of the system by load shedding during peak loads e.g. by terminating the charging process.

In some embodiments, the power system manager 22 acquires a measurement of the state of charge of the battery 34 from the first state of charge module 36. The battery state of charge measurement taken by the first state of charge module 36 is hereinafter denoted a S_{B}. The battery state of charge measurement may be a percentage charge of the battery 34. The power system manager 22 may control the battery module 16 using the battery state of charge measurement using the following rules:
v) If S_{B} ≥ 90% then the power system manager 22 controls the second switch 38 such that the battery 34 discharges to the DC bus, i.e. the second switch 38 is switched into its first state.

Alternatively, in some embodiments, if S_{B} ≥ 90% then the power system manager 22 controls the second switch 38 such that either the battery 34 discharges to the DC bus or is disconnected from the DC bus. In some embodiments, if S_{B} ≥ 90% and the load state of the power system 4 is not LIGHT, the battery 34 discharges to the DC bus (i.e. the second switch 38 is switched to its first state). In some embodiments, if S_{B} ≥ 90% and the load state of the power system 4 is LIGHT, the battery 34 is disconnected from the DC bus (i.e. the second switch 38 is switched to its third state).

In this embodiment, if S_{B} ≥ 90% then the state of charge of the battery 34 is said to be "MAXIMUM".
vi) If 80% ≤ S_{B} < 90% then the power system manager 22 controls the second switch 38 such that either the battery 34 discharges to the DC bus or the battery 34 is disconnected from the DC bus i.e. the second switch 38 is switched into either its first state or third state.

In some embodiments, if 80% ≤ S_{B} < 90% and the load state of the power system 4 is not LIGHT, the battery 34 discharges to the DC bus (i.e. the second switch 38 is switched to its first state). In some embodiments, if 80% ≤ S_{B} < 90% and the load state of the power system 4 is LIGHT, the battery 34 is disconnected from the DC bus (i.e. the second switch 38 is switched to its third state).

In this embodiment, if 80% ≤ S_{B} < 90% then the state of charge of the battery 34 is said to be "HIGH".
vii) If 60% ≤ S_{B} < 80% then the power system manager 22 controls the second switch 38 such that either the battery 34 discharges to the DC bus or the battery 34 is charged by the battery charger 40, i.e. the second switch 38 is switched into either its first state or second state.

In some embodiments, if 60% ≤ S_{B} < 80% and the load state of the power system 4 is not LIGHT, the battery 34 discharges to the DC bus (i.e. the second switch 38 is switched to its first state). In some embodiments, if 60% ≤ S_{B} < 80% and the load state of the power system 4 is LIGHT, the battery 34 is charged by the battery charger 40 (i.e. the second switch 38 is switched to its second state).

In this embodiment, if 60% ≤ S_{B} < 80% then the state of charge of the battery 34 is said to be "NORMAL".
viii) If 50% ≤ S_{B} < 60% then the power system manager 22 controls the second switch 38 such that either the battery 34 discharges to the DC bus or the battery 34 is charged by the battery charger 40, i.e. the second switch 38 is switched into either its first state or second state.

In some embodiments, if 50% ≤ S_{B} < 60% and the load state of the power system 4 is HEAVY or PEAK, the battery 34 discharges to the DC bus (i.e. the second switch 38 is switched to its first state). In some embodiments, if 50% ≤ S_{B} < 60% and the load state of the power system 4 is LIGHT or NORMAL, the battery 34 is charged by the battery charger 40 (i.e. the second switch 38 is switched to its second state).

In this embodiment, if 50% ≤ S_{B} < 60% then the state of charge of the battery 34 is said to be "LOW".
ix) If S_{B} < 50% then the power system manager 22 controls the second switch 38 such that either the battery 34 is disconnected from the DC bus or the battery 34 is charged by the battery charger 40, i.e. the second switch 38 is switched into either its third state or second state.

In some embodiments, if S_{B} < 50% and the load state of the power system 4 is LIGHT, the battery 34 is charged by the battery charger 40 (i.e. the second switch 38 is switched to its second state).In some embodiments, if S_{B} < 50% and the load state of the power system 4 is not LIGHT, the power system manager 22 sheds loads from the DC bus, e.g. by turning off one or more of the loads 20 accordingly to a priority hierarchy. If after load shedding the load state of the power system 4 become LIGHT, the battery 34 is charged by the battery charger 40. However, if the load state of the power system 4 remains not LIGHT, the battery 34 is disconnected from the DC bus (i.e. the second switch 38 is switched to its third state).

In this embodiment, if S_{B} < 50% then the state of charge of the battery 34 is said to be "MINIMUM".

Preferably, the power system manager 22 controls the battery module 16 such that the state of charge of the battery 34, S_{B}, does not fall below a threshold minimum level.

Preferably, the power system manager 22 controls the battery module 16 such that a battery maximum current limit is not exceeded.

In some embodiments, the power system manager 22 acquires a measurement of the state of charge of the supercapacitor 44 from the second state of charge module 46. The supercapacitor state of charge measurement taken by the second state of charge module 46 is hereinafter denoted a S_{S}. The supercapacitor state of charge measurement may be a percentage charge of the supercapacitor 44. The power system manager 22 may control the supercapacitor module 18 using the supercapacitor state of charge measurement using the following rules:
x) If S_{S} ≥ 90% then the power system manager 22 controls the third switch 48 such that the supercapacitor 44 discharges to the DC bus, i.e. the third switch 38 is switched into its first state.

In some embodiments, if S_{S} ≥ 90% then the power system manager 22 controls the third switch 48 such that either the supercapacitor 44 discharges to the DC bus or is disconnected from the DC bus. In some embodiments, if S_{S} ≥ 90% and I_{L} > 30A (or some other threshold value which may be equal to the current limit of the fuel cell 10), the supercapacitor 44 discharges to the DC bus (i.e. the third switch 48 is switched to its first state). In some embodiments, if S_{S} ≥ 90% and I_{L} < 30A (or some other threshold value), the supercapacitor 44 is disconnected from the DC bus (i.e. the third switch 48 is switched to its third state).

In this embodiment, if S_{S} ≥ 90% then the state of charge of the supercapacitor 44 is said to be "MAXIMUM".
xi) If 70% ≤ S_{S} < 90% then the power system manager 22 controls the third switch 48 such that either the supercapacitor 44 discharges to the DC bus or the supercapacitor 44 is charged from the DC bus via the resistor 50, i.e. the third switch 48 is switched into either its first state or second state. In some embodiments, if 70% ≤ S_{S} < 90% and I_{L} ≤ 30A (or some other threshold value), the supercapacitor 44 discharges to the DC bus (i.e. the third switch 38 is switched to its first state). In some embodiments, if 70% ≤ S_{S} < 90% and I_{L} > 30A (or some other threshold value), the supercapacitor 44 is charged from the DC bus (i.e. the third switch 38 is switched to its second state). In this embodiment, if 70% ≤ S_{S} < 90% then the state of charge of the supercapacitor 44 is said to be "NORMAL".
xii) If 60% ≤ S_{S} < 70% then the power system manager 22 controls the third switch 48 such that either the supercapacitor 44 discharges to the DC bus or the supercapacitor 44 is charged from the DC bus via the resistor 50, i.e. the third switch 48 is switched into either its first state or second state. In some embodiments, if 60% ≤ S_{S} < 70% and I_{L} > 30A (or some other threshold value), the supercapacitor 44 is charged from the DC bus (i.e. the third switch 38 is switched to its second state). In some embodiments, if 60% ≤ S_{S} < 70% and S_{B} is NORMAL or above and I_{L} is lower than HEAVY, the supercapacitor 44 is charged from the DC bus via the resistor 50 (i.e. the third switch 38 is switched to its second state). In some embodiments, if 70% ≤ S_{S} < 90% and I_{L} < 30A (or some other threshold value), the supercapacitor 44 is discharged to the DC bus (i.e. the third switch 38 is switched to its first state). In this embodiment, if 60% ≤ S_{S} < 70% then the state of charge of the supercapacitor 44 is said to be "LOW".
xiii) If S_{S} < 60% then the power system manager 22 controls the third switch 48 such that either the supercapacitor 44 is either disconnected from the DC bus or the supercapacitor 44 is charged from the DC bus via the resistor 50, i.e. the third switch 48 is switched into either its third state or second state. In some embodiments, if S_{S} < 60% and I_{L} > 30A (or some other threshold value), or I_{L} is above HEAVY, the supercapacitor 44 is disconnected from the DC bus (i.e. the third switch 38 is switched to its third state). In some embodiments, if S_{S} < 60% and S_{B} is NORMAL or above and I_{L} is lower than HEAVY, the supercapacitor 44 is charged from the DC bus via the resistor 50 (i.e. the third switch 38 is switched to its second state). In some embodiments, if S_{S} < 60% and I_{L} < 30A (or some other threshold value), the supercapacitor 44 is charged from the DC bus via the resistor 50 (i.e. the third switch 38 is switched to its second state). In this embodiment, if S_{S} < 60% then the state of charge of the supercapacitor 44 is said to be "MINIMUM".

In some embodiments, the power system manager 22 acquires a measurement of the fuel level of the fuel cell 10, for example from the fuel cell 10 or the fuel cell controller 12. The fuel cell fuel level may be a measurement of the amount of hydrogen fuel remaining for the fuel cell 10. The fuel cell fuel level may be expressed as a percentage of the total fuel cell fuel capacity on the UAV 2. The fuel cell fuel level may be through of as a "state of charge" of the fuel cell 10 and is hereinafter denoted as S_{F}. The power system manager 22 may control, via the fuel cell controller 12, operation of the fuel cell 10 using the following rules:
xiv) If S_{F} ≥ 90% then the power system manager 22 controls fuel cell 10 to be either ON (and supplying power to the DC bus) or OFF (and not supplying power to the DC bus). In some embodiments, if S_{F} ≥ 90% and I_{L} > 0A (or some other threshold value), the fuel cell 10 is turned ON. In some embodiments, if S_{F} ≥ 90% and I_{L} ≤ 0A (or some other threshold value), the fuel cell 10 is turned OFF. In this embodiment, if S_{F} ≥ 90% then the fuel level for the fuel cell 10 is said to be "MAXIMUM".
xv) If 40% ≤ S_{F} < 90% then the power system manager 22 controls the fuel cell 10 to be either ON or OFF. In some embodiments, if 40% ≤ S_{F} < 90% and I_{L} > 0A (or some other threshold value), the fuel cell 10 is turned ON. In some embodiments, if 40% ≤ S_{F} < 90% and I_{L} ≤ 0A (or some other threshold value), the fuel cell 10 is turned OFF. In this embodiment, if 40% ≤ S_{F} < 90% then the fuel level for the fuel cell 10 is said to be "NORMAL".
xvi) If 20% ≤ S_{F} < 40% then the power system manager 22 controls the fuel cell 10 to be either ON or OFF. In some embodiments, if 20% ≤ S_{F} < 40% and I_{L} > 0A (or some other threshold value), the fuel cell 10 is turned ON. In some embodiments, if 20% ≤ S_{F} < 40% and I_{L} ≤ 0A (or some other threshold value), the fuel cell 10 is turned OFF. In this embodiment, if 20% ≤ S_{F} < 40% then the fuel level for the fuel cell 10 is said to be "LOW".
xvii) If S_{F} < 20% then the power system manager 22 controls the fuel cell 10 to be either ON or OFF. In some embodiments, if S_{F} < 20% and I_{L} > 60A (or some other threshold value), the fuel cell 10 is turned ON. In some embodiments, if S_{F} < 20% and I_{L} ≤ 60A (or some other threshold value), the fuel cell 10 is turned OFF. In this embodiment, if S_{F} < 20% then the fuel level for the fuel cell 10 is said to be "MINIMUM".

In some embodiments, if the battery 34 is being charged by the battery charger 40, the power system manager 22 controls the fuel cell 10 via the controller 12 such that the fuel cell is ON and supplying power to the DC bus.

In some embodiments, if the fuel level for the fuel cell 10 is below LOW, i.e. is MINIMUM, the power system manager 22 controls the fuel cell 10 via the controller 12 such that the fuel cell is OFF and not supplying power to the DC bus.

Preferably, the power system manager 22 controls the fuel cell 10 such that the fuel cell current maximum limit is not exceeded.

Figure 5 is a process flow chart showing certain steps of an embodiment of a method of operation of the power system 4.

It should be noted that certain of the process steps depicted in the flowchart of Figure 5 and described below may be omitted or such process steps may be performed in differing order to that presented above and shown in Figure 5. Furthermore, although all the process steps have, for convenience and ease of understanding, been depicted as discrete temporally-sequential steps, nevertheless some of the process steps may in fact be performed simultaneously or at least overlapping to some extent temporally.

Some or all of the above mentioned rules may be implemented in the embodiment illustrated in Figure 5 and described in more detail below. Similarly, process steps depicted in the flowchart of Figure 5 and described below may be used to implement some or all of the above described rules.

At step s2, the power system manager 22 acquires a measurement of I_{L}, for example, from the plurality of loads 20 and/or the DC bus.

At step s4, the power system manager 22 acquires a measurement of S_{F}, for example, from the fuel cell 10 or the fuel cell controller 12.

At step s6, the power system manager 22 acquires a measurement of S_{B}, for example, from the first state of charge module 36.

At step s8, the power system manager 22 acquires a measurement of S_{S}, for example, from the second state of charge module 46.

At step s10, the power system manager 22 determines whether or not I_{L} > 0.

If at step s10, it is determined that I_{L} < 0, the method of Figure 5 ends. The method may be restarted at a later time.

However, if at step s10, it is determined that I_{L} > 0, the method proceeds to step s12.

At step s12, the power system manager 22 determines whether or not I_{L} ≤ I_{F}.

If at step s12, it is determined that I_{L} ≤ I_{F}, the method proceeds to step s14.

However, if at step s12, it is determined that I_{L} > I_{F}, the method proceeds to step s34. Step s34 will be described in more detail later below after a description of steps s14 to s32.

At step s14, the power system manager 22 determines whether or not S_{F} > 20%.

If at step s14, it is determined that S_{F} > 20%, the method proceeds to both step s16 and s20.

However, if at step s14, it is determined that S_{F} ≤ 20%, the method proceeds to both steps s18 and s20. Step s20 will be described in more detail later below after a description of steps s16 and s18.

At step s16, responsive to determining that S_{F} > 20% at step s14, the power system manager 22 controls the power system 4 to operate in "fuel cell mode". In this embodiment, in fuel cell mode, the power system manager 22 controls the fuel cell 10 via the fuel cell controller 12 to be ON and supplying power to the DC bus. In some embodiments, in fuel cell mode, the battery 34 and/or the supercapacitor 44 may be disconnected from the DC bus or being charged. In fuel cell mode, at least the fuel cell 10 tends to satisfy the current demands of the loads 20. After step s16, the method proceeds back to step s2.

At step s18, responsive to determining that S_{F} ≤ 20% at step s14, the power system manager 22 generates a warning that the fuel level of the fuel cell 10 is low. This warning may be stored or logged on board the UAV 2 and/or may be transmitted to an entity remote from the UAV 2, for example a human controller or owner of the UAV 2.

At step s20, the power system manager 22 determines whether or not S_{B} < 50%.

If at step s20, it is determined that S_{B} < 50%, the method proceeds to both step s22 and s24.

However, if at step s20, it is determined that S_{B} ≥ 50%, the method proceeds to both steps s26 and s28. Steps s26 and s28 will be described in more detail later below after a description of steps s22 and s24.

At step s22, responsive to determining that S_{B} < 50% at step s20, the power system manager 22 generates a warning that the battery state of charge is low. This warning may be stored or logged on board the UAV 2 and/or may be transmitted to an entity remote from the UAV 2, for example a human controller or owner of the UAV 2.

At step s24, responsive to determining that S_{B} < 50% at step s20, the power system manager 22 controls the battery module 16 such that the battery 34 is charged by the battery charger 40. In this embodiment, the power system manager 22 controls the second switch 38 to switch to its second state such that the battery charger 40 charges the battery 34.

Returning now to the case where, at step s20, it is determined that S_{B} ≥ 50%, at step s26 the power system manager 22 controls the power system 4 to operate in "battery mode". In this embodiment, in battery mode, the power system manager 22 controls the battery module 16 such that the battery 34 supplies power to the DC bus. In this embodiment, the power system manager 22 controls the second switch 38 to switch to its first state such that the battery 34 discharges to the DC bus. In some embodiments, in battery mode, the supercapacitor 44 may be disconnected from the DC bus or being charged. In battery mode, at least the battery 34 (and in some embodiments the fuel cell 10) tends to satisfy the current demands of the loads 20. In some embodiments, in battery mode, the fuel cell 10 may be disconnected from the DC bus e.g. via the first switch 30, and/or the fuel cell 10 may be turned off. After step s26, the method proceeds back to step s2.

At step s28, responsive to determining that S_{B} ≥ 50% at step s20, the power system manager 22 determines whether or not S_{S} < 60%.

If at step s28, it is determined that S_{S} < 60%, the method proceeds to step s30.

However, if at step s28, it is determined that S_{S} ≥ 60%, the method proceeds to step s32.

At step s30, responsive to determining that S_{S} < 60% at step s28, the power system manager 22 controls the supercapacitor module 18 such that the supercapacitor 44 is charged from the DC bus via the resistor 50. In this embodiment, the power system manager 22 controls the third switch 48 to switch to its second state such that the supercapacitor 44 is charged. In some embodiments, the power system manager 22 may also generate a warning that the state of charge of the supercapacitor 44 is low. This warning may be stored or logged on board the UAV 2 and/or may be transmitted to an entity remote from the UAV 2, for example a human controller or owner of the UAV 2. After step s30, the method proceeds back to step s2.

At step s32, responsive to determining that S_{S} ≥ 60% at step s28, the power system manager 22 controls the power system 4 to operate in "supercapacitor mode". In this embodiment, in supercapacitor mode, the power system manager 22 controls the supercapacitor module 18 such that the supercapacitor 44 supplies power to the DC bus. In this embodiment, the power system manager 22 controls the third switch 48 to switch to its first state such that the supercapacitor 44 discharges to the DC bus. In some embodiments, in supercapacitor mode, the battery 34 may be disconnected from the DC bus or being charged. In supercapacitor mode, at least the supercapacitor 44 (and in some embodiments the fuel cell 10) tends to satisfy the current demands of the loads 20. In some embodiments, in supercapacitor mode, the fuel cell 10 may be disconnected from the DC bus e.g. via the first switch 30, and/or the fuel cell 10 may be turned off. After step s32, the method proceeds back to step s2.

Returning now to the case where at step s12 it is determined that I_{L} > I_{F}, at step s34 the power system manager 22 determines whether or not I_{F} < I_{L} ≤ I_{B}.

If at step s34, it is determined that I_{F} < I_{L} ≤ I_{B}, the method proceeds to step s36.

However, if at step s34, it is determined that I_{L} > I_{B}, the method proceeds to step s44. Step s44 will be described in more detail later below after a description of steps s36 to s42.

At step s36, the power system manager 22 determines whether or not S_{B} < 50%.

If at step s36, it is determined that S_{B} ≥ 50%, the method proceeds to step s26, which is described in more detail earlier above.

However, if at step s36, it is determined that S_{B} < 50%, the method proceeds to both step s38 and s40.

At step s38, the power system manager 22 sheds loads from the DC bus, e.g. by turning off one or more of the loads 20 accordingly to a priority hierarchy. In this embodiment, non-essential loads are shed. After step s38, the method proceeds back to step s2.

Responsive to determined that S_{B} < 50% at step s36, the method proceeds to both step s26 and s40.

Step s26 is described in more detail earlier above.

At step s40, the power system manager 22 determines whether or not S_{S} < 60%.

If at step s40, it is determined that S_{S} ≥ 60%, the method proceeds to step s32. Step s32 is described in more detail earlier above.

However, if at step s40, it is determined that S_{S} < 60%, the method proceeds to step s42.

At step s42, responsive to determining that S_{S} < 60% at step s40, the power system manager 22 controls the supercapacitor module 18 such that the supercapacitor 44 is disconnected from the DC bus. In this embodiment, the power system manager 22 controls the third switch 48 to switch to its third state thereby disconnecting the supercapacitor 44 from the DC bus. After step s42, the method proceeds back to step s2.

Returning now to the case where at step s34 it is determined that I_{L} > I_{B}, at step s44 the power system manager 22 determines whether or not I_{B} < I_{L} ≤ I_{B}+I_{F}.

If at step s44, it is determined that I_{B} < I_{L} ≤ I_{B}+I_{F}, the method proceeds to step s46.

However, if at step s44, it is determined that the condition that I_{B} < I_{L} ≤ I_{B}+I_{F} is not satisfied, the method proceeds to step s58. Step s58 will be described in more detail later below after a description of steps s46 to s56.

At step s46, the power system manager 22 determines whether or not S_{B} > 50%.

If at step s46, it is determined that S_{B} > 50%, the method proceeds to both steps s48 and s50.

However, if at step s46, it is determined that S_{B} ≤ 50%, the method proceeds to step s56. Step s56 will be described in more detail later below after a description of steps s48 to s54.

At step s48, responsive to determining that S_{B} > 50% at step s46, the power system manager 22 controls the power system 4 to operate in "fuel cell and battery mode". In this embodiment, in fuel cell and battery mode, the power system manager 22 controls the fuel cell 10 via the fuel cell controller 12 to be ON and supplying power to the DC bus, and also the power system manager 22 controls the battery module 16 such that the battery 34 supplies power to the DC bus. In this embodiment, the power system manager 22 controls the second switch 38 to switch to its first state such that the battery 34 discharges to the DC bus. In some embodiments, in fuel cell and battery mode, the supercapacitor 44 may be disconnected from the DC bus or being charged. In fuel cell mode, at least the fuel cell 10 and the battery 34 tend to satisfy the current demands of the loads 20. After step s48, the method proceeds back to step s2.

At step s50, responsive to determining that S_{B} > 50% at step s46, the power system manager 22 determines whether or not S_{S} < 60%.

If at step s50, it is determined that S_{S} ≥ 60%, the method proceeds to step s52.

However, if at step s50, it is determined that S_{S} < 60%, the method proceeds to step s54.

At step s52, responsive to determining that S_{S} ≥ 60% at step s50, the power system manager 22 controls the power system 4 to operate in "supercapacitor mode". In this embodiment, in supercapacitor mode, the power system manager 22 controls the supercapacitor module 18 such that the supercapacitor 44 supplies power to the DC bus. In this embodiment, the power system manager 22 controls the third switch 48 to switch to its first state such that the supercapacitor 44 discharges to the DC bus. In some embodiments, in supercapacitor mode, the battery 34 may be disconnected from the DC bus or being charged. In supercapacitor mode, at least the supercapacitor 44 (and in some embodiments the fuel cell 10) tends to satisfy the current demands of the loads 20. After step s52, the method proceeds back to step s2.

Advantageously, connecting the supercapacitor 44 to the DC bus tends to filter transient or spikes in the DC bus that may be caused by switching or other transient loads. The relatively high power density characteristics of the supercapacitor 44 tend to be effectively utilised for this effect. This advantageously tends to avoid wasting capacitor charge.

At step s54, responsive to determining that S_{S} < 60% at step s50, the power system manager 22 controls the supercapacitor module 18 such that the supercapacitor 44 is disconnected from the DC bus. In this embodiment, the power system manager 22 controls the third switch 48 to switch to its third state thereby disconnecting the supercapacitor 44 from the DC bus. After step s54, the method proceeds back to step s2.

At this step the load on the DC bus is in the HEAVY state. Also, the supercapacitor state of charge is MINIMUM. This means that the voltage across the supercapacitor 44 tends to be below the DC bus voltage. Thus, by disconnecting the super capacitor 44 from the DC bus, the supercapacitor 44 drawing more current from the battery 34 and the fuel cell 10 tends to be avoided. This tends to avoid the battery 34 and the fuel cell 10 operating in regions of high losses.

Returning to the case where at step s46 it is determined that S_{B} ≤ 50%, at step s56, the power system manager 22 sheds loads from the DC bus, e.g. by turning off one or more of the loads 20 accordingly to a priority hierarchy. In this embodiment, non-essential loads are shed. After step s56, the method proceeds back to step s2.

Returning to the case where at step s44 it is determined that the condition that I_{B} < I_{L} ≤ I_{B}+I_{F} is not satisfied, at step s58 the power system manager 22 determines whether or not I_{L} > I_{B}+I_{F}.

If at step s58, it is determined that I_{L} > I_{B}+I_{F}, the method proceeds to step s56. Step s56 is described in more detail earlier above.

However, if at step s58, it is determined that the condition that I_{L} > I_{B}+I_{F} is not satisfied, the method proceeds back to step s2.

Thus, an embodiment of a method of operation of the power system 4 is provided.

The above described system and methods tend to improve UAV flight endurance.

The above described system and methods tend to optimise use of a fuel cell, a battery, and a supercapacitor. The fuel cell, battery, and/or supercapacitor tend to be constrained to operate in regions of lower losses by sharing the load power demand.

Advantageously, the above described system and methods tend to ensure that the power supply unit on the UAV (i.e. the fuel cell, the battery, and the supercapacitor) meets the load demand from the loads, and that the load does not exceed the overall system limit.

Typically, the rate of charge and discharge of a lithium, polymer battery is characterised by a "C rating". Discharging the battery at high C rating tends to reduce the normal operation region of the battery due to exponential losses and capacity losses. Advantageously, the above described battery management processes tend to prevent the battery from operating in regions of high energy losses. The state of charge of the battery is monitored to determine the battery state of operation based on the state of load.

Advantageously, the above described methods and apparatus tend to ensure that battery state of heath is maintained by preventing over charging and over discharging of the battery, for example, beyond manufacture recommendations. The above described constraints tend to prevent battery capacity losses due to high current discharge rate. Also, the above constraints tend to prevent or oppose the fuel cell operating in high power loss regions.

Advantageously, the above described system and method may be implemented with either a constant load or a variable load profile.

Advantageously, the above described system and method tends to takes into account the states of all power sources and loads on the UAV.

Many conventional power management systems and algorithms for a fuel cell hybrid system require the use of multiple DC/DC converters. For example, some conventional systems couple a respective DC-DC converter to each of a fuel cell, a battery, and/or a supercapacitor.

Advantageously, the above described system and method tends to avoid the use of multiple DC-DC converters. Thus, the weight of the UAV tends to be reduced. In the above described system, only a single DC-DC converter is used to maintain DC bus voltage, by preventing voltage fluctuations caused by fuel cell voltage output variation due to variation in load current demand. The battery and the supercapacitor modules have substantially the same voltage ratings as the DC-DC converter voltage output.

Many conventional power management systems and algorithms use multiple DC-DC converters to execute controller commands. In contrast, the above described methods and apparatus use solid state switches to execute the power management control commands. Inputs to the power system manager for controlling the power system include the battery state of charge, the supercapacitor state of charge, the fuel cell state of charge, and a current load demand.

Advantageously, the above described system and methods tend to constrain the fuel cell to operate in regions of higher efficiency to reduce or prevent regions of high Ohmic losses and avoid concentration losses.

Furthermore, current spike demands from both the battery and the fuel cell tend to be limited to reduce losses. Both of these power sources can share the load to ensure that they both operate in high optimal regions when load current demand is higher than the optimal operating region of either of these power sources.

Advantageously, the supercapacitor tends to filter "voltage ripples" during switching between the fuel cell and the battery. Also, the supercapacitor tends to protect the fuel cell from surges in current demand. The supercapacitor also tends to reduce voltage ripples caused by operation of the DC/DC converter.

Advantageously, the states of charge of the battery and supercapacitor may be considered by the control algorithm to prevent battery over discharge and battery overcharge. Also, the state of charge of the supercapacitor tends to be maintained within nominal working voltage to prevent high inrush current during supercapacitor charging. A high inrush current could cause the battery or fuel cell to operate out of the optimal operating regions.

In the above embodiments, the power system is implemented on board a UAV. However, in other embodiments, the power system is implemented on a different entity other than a UAV, for example, a different type of vehicle such as a manned aircraft, a land-based vehicle, or a water-based vehicle.

In the above embodiments, the power system comprises a single fuel cell, a single battery, and a single supercapacitor. However, in other embodiments, the power system comprises multiple fuel cells. In some embodiments, the power system comprises multiple batteries. In some embodiments, the power system comprises multiple supercapacitors.

In the above embodiments, the fuel cell is a PEM fuel cell. However, in other embodiments, the fuel cell is a different type of fuel cell, for example a phosphoric acid fuel cell.

In the above embodiments, the converter is a DC-DC converter configured to output to the DC bus a constant voltage power supply having a voltage of 24V. However, in other embodiments, the converter may be a different type of converter and may be configured to provide a different output to the DC bus, e.g. a constant voltage power supply having a voltage other than 24V. In the above embodiments, the battery is a lithium polymer battery. However, in other embodiments, the battery is a different type of battery, or other rechargeable store of electrical power.

In the above embodiments, the battery is configured to provide constant current output of 24V. However, in other embodiments, the battery is configured to produce a different output.

In the above embodiments, the second and third switch are solid state SPTT switches. Also, the first switch is a solid state switch. However, in other embodiments, one or more of the switches may be a different type of switch that provides the above described functionality.

In some above embodiments, the power system manager controls the power system by implementing some or all of the above described rules. However, in other embodiments, one or more different rules may be implemented instead of or in addition to one or more of the above described rules.

In some above embodiments, the rules implemented by the power system manager to control the power system include the above described Boolean conditions. However, in other embodiments, the Boolean condition of one or more of the rules is different to that described above. For example, in the above embodiments, certain rules include a Boolean condition specifying a threshold for a state of charge of the battery. However, in other embodiments, a different threshold for the state of charge of the battery may be applied.

## Claims

1. A power system comprising:
an electrical power bus;
one or more loads (20) electrically coupled to the electrical power bus;
a fuel cell (10);
a DC-DC converter (14) electrically coupled between the fuel cell (10) and the electrical power bus;
a battery (34);
a switch (38) electrically coupled between the battery (34) and the electrical power bus; and
a power system manager (22) configured to control operation of the switch (38); wherein
the switch (38) is switchable between a first state and a second state;
the first state of the switch (38) is such that the battery (34) is directly connected to the electrical power bus such that the battery (34) provides electrical power directly to the electrical power bus; and
the second state of the switch (38) is such that the battery (34) is disconnected from the electrical power bus.

2. A power system according to claim 1, wherein the power system comprises only a single DC-DC converter (14).

3. A power system according to claims 1 or 2, further comprising a measurement device configured measure fuel level for the fuel cell (10), and to send the measured fuel level for the fuel cell (10) to the power system manager (22).

4. A power system according to any of claims 1 to 3, further comprising a first state of charge measurement device (36) configured measure a state of charge of the battery (34), and to send the measured state of charge of the battery (34) to the power system manager (22).

5. A power system according to any of claims 1 to 4, wherein the power system manager (22) is configured to control operation of the switch depending upon one or more parameters selected from the group of parameters consisting of: a state of charge of the battery (34), a state of charge of a supercapacitor (44), a fuel level for the fuel cell (10), and a load demand of the one or more loads (20).

6. A power system according to any of claims 1 to 5, wherein:
the battery (34) is a rechargeable battery;
the power system further comprises a battery charger (40) coupled between the electrical power bus and the battery (34) via the switch (38);
the switch (38) is switchable between its first state, its second state, and a third state;
the third state of the switch (38) is such that the battery (34) is connected to the electrical power bus via the battery (34) charger such that the battery charger (40) charges the battery (34) with electrical power from the electrical power bus.

7. A power system according to any of claims 1 to 6, further comprising:
a supercapacitor (44);
a further switch (48) electrically coupled between the supercapacitor (44) and the electrical power bus; wherein
the power system manager (22) is configured to control operation of the further switch (48);
the further switch (48) is switchable between a first state and a second state;
the first state of the further switch (48) is such that the supercapacitor (44) is directly connected to the electrical power bus such that the supercapacitor (44) provides electrical power directly to the electrical power bus; and
the second state of the further switch (48) is such that the supercapacitor (44) is disconnected from the electrical power bus.

8. A power system according to claim 7, further comprising a second state of charge measurement device (46) configured to measure a state of charge of the supercapacitor (44), and to send the measured state of charge of the supercapacitor (44) to the power system manager (22).

9. A power system according to claim 7 or 8, wherein the power system manager (22) is configured to control operation of the further switch (48) depending upon one or more parameters selected from the group of parameters consisting of: a state of charge of the battery (34), a state of charge of a supercapacitor (44), a fuel level for the fuel cell (10), and a load demand of the one or more loads (20).

10. A power system according to any of claims 7 to 9, wherein:
the power system further comprises a resistor (50) coupled between the electrical power bus and the supercapacitor (44) via the further switch (48);
the further switch (48) is switchable between its first state, its second state, and a third state;
the third state of the further switch (48) is such that the supercapacitor (44) is connected to the electrical power bus via the resistor (50) such that the supercapacitor (44) receives electrical power from the electrical power bus via the resistor (50).

11. A power system according to any of claims 1 to 10, wherein:
the DC-DC converter (14) is configured to convert a power supply received from the fuel cell (10) into a constant voltage power supply having a voltage substantially equal to a predefined voltage level, and to output the constant voltage power supply to the electrical power bus; and
the battery (34) is configured to provide, to the electrical power bus, an electrical power supply having a voltage substantially equal to the predefined voltage level.

12. A power system according to any of claims 1 to 11, further comprising:
a second further switch (30) coupled between the DC-DC converter (14) and the electrical power bus; wherein
the power system manager (22) is configured to control operation of the second further switch (30) depending upon one or more parameters selected from the group of parameters consisting of: a state of charge of the battery (34), a state of charge of a supercapacitor (44); a fuel level for the fuel cell (10), and a load demand of the one or more loads (20);
the second further switch (30) is switchable between a first state and a second state;
the first state of the second further switch is such that the fuel cell (10) is electrically connected to the electrical power bus via the DC-DC converter (14) such that the fuel cell (10) provides electrical power directly to the electrical power bus; and
the second state of the second further switch (30) is such that the DC-DC converter (14) and the fuel cell (10) are disconnected from the electrical power bus.

13. A vehicle (2) comprising a power system (4) according to any of claims 1 to 12.

14. A vehicle (2) according to claim 13, wherein the vehicle is an unmanned air vehicle.

15. A method of providing a power system, the method comprising:
electrically coupling one or more loads (20) to an electrical power bus;
providing a fuel cell (10);
electrically coupling a DC-DC converter (14) between the fuel cell (10) and the electrical power bus;
providing a battery (34);
electrically coupling a switch (38) between the battery (34) and the electrical power bus; and
operatively coupling a power system manager (22) to the switch (38), the power system manager (22) configured to control operation of the switch (38); wherein
the switch (38) is switchable between a first state and a second state;
the first state of the switch (38) is such that the battery (34) is directly connected to the electrical power bus such that the battery (34) provides electrical power directly to the electrical power bus; and
the second state of the switch (38) is such that the battery (34) is disconnected from the electrical power bus.
